# EUROPEAN PATENT APPLICATION

(11) **EP 2 447 807 A1**
(43) Date of publication of application: **02.05.2012**
(21) Application number: 10014036.7
(22) Date of filing: 27.10.2010
(51) Int. Cl.: G06F 3/01, G06F 17/30

(54) **Loading of data to an electronic device**

(71) Applicant: Sony Ericsson Mobile Communications AB, 221 88 Lund (SE)
(72) Inventor: Rios, Rodrigo, 211 57 Malmö (SE)
(74) Representative: Banzer, Hans-Jörg

(57) **Abstract**

An image is displayed on a display (12) of an electronic device (10). The image includes a control element (50), e.g., a web link. Further, front camera images are received from a front camera (14) of the electronic device (10). The front camera (14) is arranged to face toward a user of the electronic device (10). The received front camera images are analyzed to detect whether the user focuses on the control element (50). In response to detecting that the user focuses on the control element (50), loading of data associated with the control element into a memory of the electronic device (10) is started.

## Description

### FIELD OF THE INVENTION

The present application relates to methods for loading data to an electronic device and to corresponding devices.

### BACKGROUND

In electronic devices such as mobile phones, computers, media players, or the like, it is known to load data from external sources, e.g., from the internet, to the electronic device. Such data may be, e.g., content related to web links, multimedia data, or the like. The data will be loaded via a corresponding interface of the electronic device, e.g., an internet connection. The capabilities of this interface may however vary depending on the interface type. For example, in the case of mobile electronic devices using a radio interface to load the data, a speed available for loading the data may be less than in the case of electronic devices using a wire-based access, e.g., using Digital Subscriber Line (DSL), coaxial cable or optical fiber technology. However, even in the latter case, the speed of loading the data to the electronic device is limited.

Due to the speed limitation in loading the data to the electronic device, a user of the electronic device may experience undesirable delays. For example, after selecting a web link, the user may need to wait until the data associated with the web link is loaded to the electronic device.

Accordingly, there is a need for techniques which allow for efficiently loading data to an electronic device.

### SUMMARY

According to an embodiment of the invention, a method of loading data to an electronic device is provided. According to the method, an image is displayed on a display of the electronic device. The image includes a control element. For example, if the displayed image is a web page, the control element may be a web link. Further, front camera images are received from a front camera of the electronic device. The front camera is arranged to face toward a user of the electronic device. The received front camera images are analyzed to detect whether the user focuses on the control element. In response to detecting that the user focuses on the control element, loading of data associated with the control element into a memory of the electronic device is started.

According to an embodiment of the method, also an output signal of a pointing device is received, and the loading of the data is stopped depending on the received output signal of the pointing device. Alternatively or in addition, already loaded data may be discarded depending on the received output signal of the pointing device. More specifically, it may be determined from the output signal of the pointing device whether the user has selected the control element. In response to determining that the user has not selected the control element within a set time after starting to load the data, the loading of the data may be stopped. Alternatively or in addition, already loaded data may be discarded in response to determining that the user has not selected the control element within a set time after starting to load the data.

According to an embodiment of the method, the process of analyzing of the front camera images may include evaluating movements of the user's eyes, which may be used to determine an area of the display the user is focusing on.

According to an embodiment of the method, the process of analyzing the front camera images may include evaluating a blinking pattern of the user's eyes, which may be used to determine whether the user is focusing on a particular area of the display.

According to an embodiment of the method, the process of analyzing the front camera images may also include evaluating a pupil size of the user's eyes, which may be used to determine whether the user is focusing on a particular area of the display.

According to an embodiment of the method, the process of analyzing of the front camera images may also include detecting a facial expression of the user. For example, the facial expression may be indicative of the user increasing concentration on a particular area of the display.

According to an embodiment of the method, also conditional data are received. The process of loading the data may then be started further depending on the received conditional data. For example, the conditional data may comprise information on a location of the electronic device. In addition or as an alternative, the conditional data may also comprise learned information on the user's preferences. In this way, the loading if the data to the electronic device may be customized to the user's behavior.

According to a further embodiment of the invention, an electronic device is provided. The electronic device is equipped with a display, a front camera, a memory, an interface, and a processor. The display is operable to display an image including a control element. For example, the image may be a web page and the control element may be a web link. The front camera is arranged to face toward a user of the electronic device. The interface is operable to load data into the memory. In some embodiments, the interface may be a radio interface. The processor is configured to receive front camera images from the front camera and to analyze the received front camera images. This analysis has the purpose of detecting whether the user of the electronic device focuses on the control element. In response to detecting that the user focuses on the control element, the processor starts loading data associated with the control element into the memory, which is accomplished via the interface.

According to an embodiment, the electronic device further includes pointing device, e.g., a trackpad, a joystick, navigation key(s), or the like. The pointing device is operable to navigate on the image as displayed by the display. In some embodiments, the pointing device may also be implemented using a touchscreen functionality of the display. In this embodiment, the processor may be further configured to receive an output signal of the pointing device and to stop loading of the data depending on the received output signal of the pointing device. Alternatively or in addition, the processor may also discard already loaded data depending on the received output signal of the pointing device.

According to an embodiment, the electronic device is configured to operate in accordance with a method according to any of the above embodiments.

In other embodiments, other methods or devices may be provided. Also, it will be appreciated by those skilled in the art that features of the above-described embodiments may be combined with each other as appropriate and new embodiments may be formed by combining one or more features of the above-mentioned embodiments.

The foregoing and other features and advantages of embodiments of the invention will become further apparent from the following detailed description and the accompanying drawings.

### BRIEF DESCRIPTION OF THE DRAWINGS

Embodiments of the present invention are illustrated by the accompanying figures, in which:
Fig. 1 schematically illustrates a front view of an electronic device according to an embodiment of the invention;
Fig. 2 schematically illustrates components in the electronic device;
Fig. 3 schematically illustrates an operating scenario of the electronic device;
Fig. 4 schematically illustrates an example of a front camera image provided by a front camera of the electronic device ; and
Fig. 5 shows a flow chart for schematically illustrating a method according to an embodiment of the invention.

### DETAILED DESCRIPTION

In the following, embodiments of the present invention will be described in more detail and with reference to the accompanying drawings. The described embodiments are intended to be merely exemplary and not to be construed as limiting the scope of the present invention. It should be noted that in the drawings the elements are not necessary to scale with each other but have been depicted in a manner which allows for conveying features of the illustrated embodiments to a person skilled in the art.

In the following detailed description, embodiments of the present invention are described which relate to an electronic device, which may be in the form of a mobile phone, a computer, a media player, or the like. However, it is to be understood that the concepts as described hereinafter could also be applied to other types of user devices. In this respect, it is to be understood that details of the electronic circuitry and components provided in the electronic device will depend on the type of application the electronic device is intended for. Accordingly, the electronic device may also include components which are addressed in the following discussion.

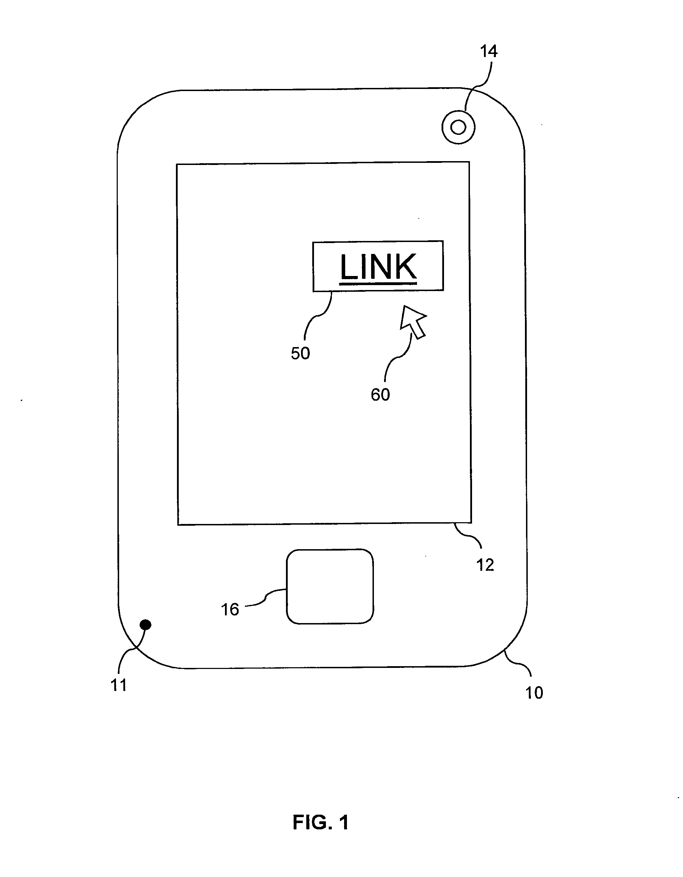

Fig. 1 shows a front view of an electronic device 10 according to an embodiment of the invention. As illustrated, the electronic device 10 is equipped with a display 12 mounted in a front surface of a housing 11 of the user device 10. The display 12 may for example be implemented using thin film transistor (TFT) technology or organic light emitting diode (OLED) technology. In the following, it will be assumed that the display 12 is a full graphical display which allows to display both text and graphics. That is to say, an image shown by the display may include only text, only graphics, and or a combination of text and graphics. However, it is to be understood that the concepts as described herein could also be implemented using a display which is limited to displaying text or limited to displaying certain graphic symbols.

As further illustrated, the electronic device 10 is equipped with a front camera 14. The front camera 14 is mounted in the front surface of the housing 11 and therefore arranged to face toward a user looking onto the display 12. For example, the front camera 14 may be implemented using a charge coupled device (CCD) image sensor.

Further, the electronic device 10 also includes a pointing device 16. The pointing device 16 has the purpose of allowing the user of the electronic device 10 to navigate in the image shown on the display. For example, the image be a web page or a menu. The pointing device 16 may be implemented using a trackpad, a joystick, one or more navigation keys, or the like. In some embodiments, the pointing device 16 could also be implemented using a touchscreen functionality of the display 12. Using the navigation device 16, the user may select a control element 50 shown on the displayed image. In the illustrated example, the control element 50 is a link, e.g., a web link or a hypertext link. Again, it is to be understood that the control element 50 may include text and/or a graphical symbol, e.g., a certain icon. In some embodiments, the control element 50 could also be an item within a menu. The selection as performed by the pointing device 16 may involve moving a pointer element 60 shown on the display 12 and performing a click operation when the pointer element 60 points on the control element 50, e.g., a single click or a double click. As illustrated, the pointer element 60 may be a graphical symbol. In other embodiments, the pointer element 60 could be implemented in a different manner, e.g., by selectively highlighting structures in the displayed image or by using some other type of cursor. In embodiments using a touchscreen implementation of the pointing device 16, the selection may also be performed by physically tipping on the displayed control element 50, e.g., with the user's finger or some physical pointing device, e.g., a control pen. Such embodiments may be implemented without the pointer element 60.

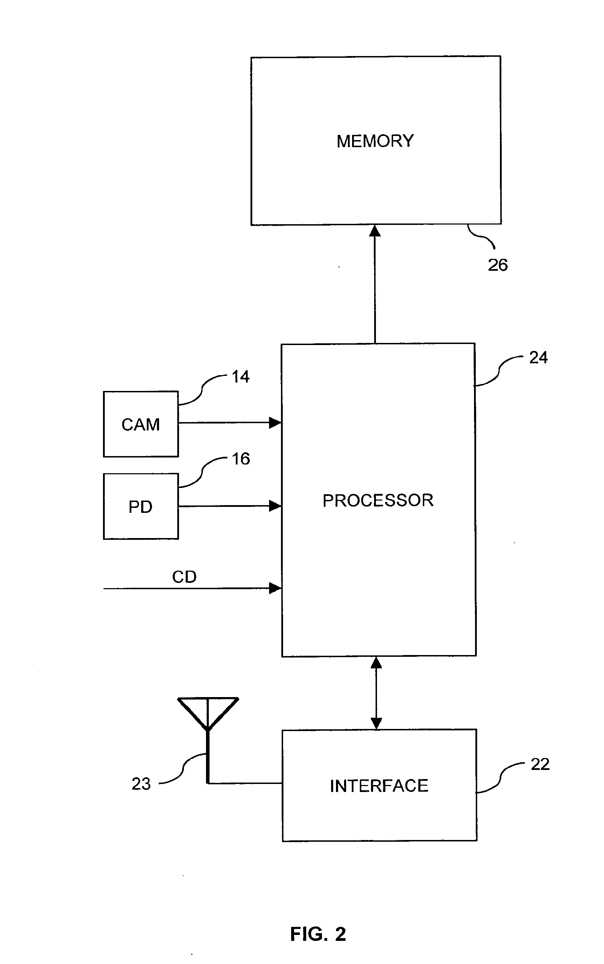

Fig. 2 shows a block diagram for schematically illustrating components of the electronic device 10, which may be used for implementing concepts of loading data according to embodiments of the invention. In particular, Fig. 2 illustrates the front camera (CAM) 14, the pointing device (PD) 16, an interface 22, a processor 24, and a memory 26. The processor 24 is coupled to the front camera 14 to receive front side camera images therefrom. In addition, the processor 24 is coupled to the pointing device 16 to receive output signals of the pointing device 16. As further, the processor 24 may also receive conditional data (CD), e.g., from a positioning device operable to determine the geographic location of the electronic device 10 and/or from a learning algorithm operable to learn user preferences. In some embodiments, the learning algorithm could also be implemented by the processor 24 and the conditional data CD could then include information to be processed by the learning algorithm. The interface 22 may be any type of interface which is suitable for loading data to the electronic device 10. In the illustrated example, the interface 22 is a radio interface which receives the data via an antenna 23 of the electronic device 10. The memory 26 may be a typical volatile or non-volatile electronic memory, e.g., a flash memory, a random-access memory (RAM), e.g. a Dynamic RAM (DRAM) or static RAM (SRAM), a mass storage, e.g. a hard disk or solid state disk, or the like.

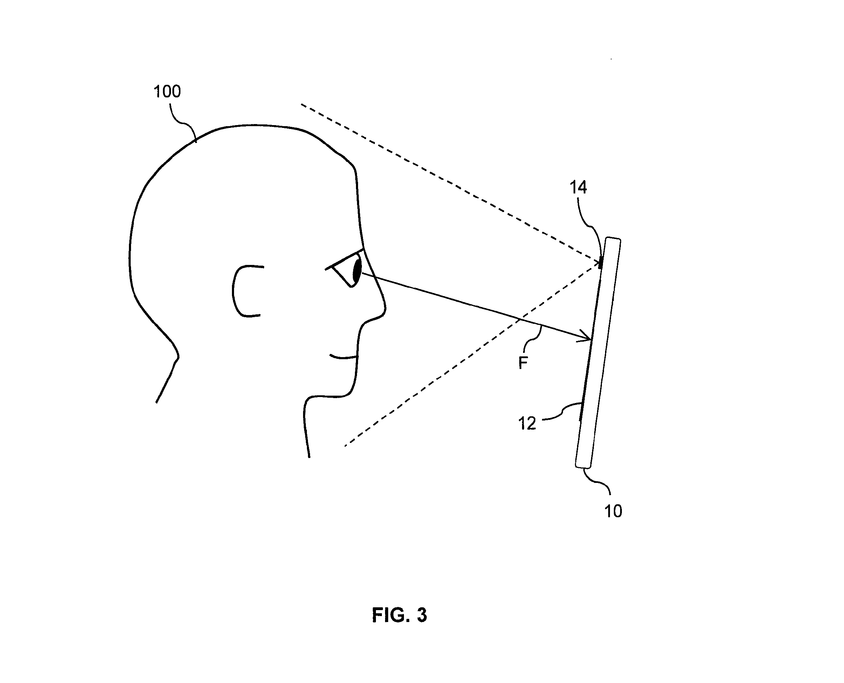

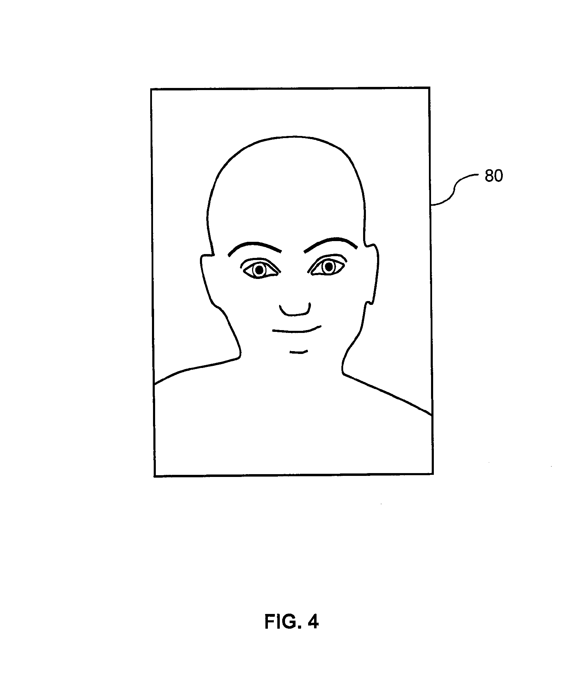

Fig. 3 shows a typical operating scenario in which the concepts of loading data are applied. As can be seen, the user 100 of the electronic device 10 faces the display 12. In particular, the user's look may be focused onto a certain point or area of the image shown on the display 12, which is indicated by arrow F. An imaging region of the front camera 14 is indicated by dashed lines. As can be seen, the front camera 14 detects images covering the face of the user 100. Fig. 4 shows an example of a front camera image 80 as detected by the front side camera 14. As can be seen, the front side camera image 80 allows to evaluate characteristic features of the user's face, e.g., position of the eyes, size of the pupils, blinking of the eyes, or certain face expressions. For some characteristics, e.g., movement of the eyes, changes in the size of the pupils due to widening or narrowing of the iris, blinking patterns or blinking frequency, may be evaluated from a sequence of such front camera images.

The concepts of loading data to the electronic device as explained in the following are based on analyzing front camera images provided by the front camera 14 so as to be able to start loading of data in a predictive manner. In particular, the front camera images are received by the processor 24 and analyzed so as to determine whether the user 100 of the electronic device 10 focuses on a control element shown on the display 12, e.g., the control element 50 as illustrated in Fig. 1. If it is determined that the user 100 focuses on the control element, the processor 24 starts loading data associated with the control element into the memory 26, which is accomplished via the interface 22. For example, if the control element is a web link, this data may be the content the web link refers to. Since loading of the data is started without any explicit action by the user 100, but on the basis of a prediction using the front camera images, this operation may also be referred to as predictive preloading of the data. By initiating the process of loading the data on the basis of the analysis of the front camera images, the data is earlier available in the electronic device 10. For example, delays due to a limited speed of the interface 22 can be reduced or avoided.

The initiated process of loading the data may continue until the data has been completely loaded or until the process is stopped by some triggering event. For example, such a triggering event may be that the analysis of the front camera images indicates that the user 100 has changed the focus. Also, the user may have used the pointing device 16 for some action which indicates that the user has other intentions than loading the data associated with the control element. Examples of such actions are scrolling of the content shown on the display 12 or beginning to move a pointer element, e.g., the pointer element 60 of Fig. 1, away from the control element. Further, already loaded data may be discarded in response to such triggering events. In this way, efficient usage of the memory 26 is possible.

Also, the process of loading the data may be stopped and/or already loaded data may be discarded when, after a set time interval after starting to load the data, the user 100 has not selected the control element, thereby confirming that the data should be loaded. This time interval may be in the range of a few seconds or even below one second. By suitably setting this time interval, a tradeoff between expedited availability of the data in the electronic device 10 and limiting unneeded loading of data can be achieved.

In each case, the loaded data will typically not be further processed, e.g., by showing corresponding content on the display 12, before the user actually selects the control element. In this way, uncontrolled processing of preloaded data can be avoided.

The process of analyzing the front camera images by the processor 24 may include evaluating the positions of the user's eyes or movements of the user's eyes. These positions and/or movements may be used to determine an area of the display the user is focusing on, in the following also referred to as focus area. In this process, specifically the position or movement or the iris or pupil within the respective eye may be taken into account. For example, a stationary position close to the lower eyelid may indicate a focus area in the lower part of the display 12. On the other hand, a stationary position close to the upper eyelid may indicate a focus area in the upper part of the display 12. Similarly, a stationary position close to the left corner of the eye (as seen in the front camera image 80) may indicate a focus area in the right part of the display 12, and a stationary position close to the right corner of the eye (as seen in the front camera image 80) may indicate a focus area in the left part of the display 12. Here, the term "stationary" means that changes of the position are reduced as compared to a situation in which the user 100 is not focusing.

Further, the process of analyzing the front camera images by the processor 24 may include evaluating a blinking pattern of the user's eyes. This evaluation may be used to determine whether the user 100 is actually focusing on a particular point or area of the display 12. For example, either a reduced blinking frequency or an increased blinking frequency may indicate that the user is focusing on a certain point or area of the display. In some embodiments, even more complex blinking patterns may be evaluated.

Further, the process of analyzing the front camera images may also include evaluating a pupil size of the user's eyes. This evaluation may be used to determine whether the user 100 is actually focusing on a particular point or area of the display 12. For example, narrowing, widening or a sequence of narrowing and widening of the pupil may indicate that the user 100 is focusing on a certain point or area of the display.

Further, the process of analyzing of the front camera images may also include detecting a certain facial expression of the user. For example, the facial expression may be indicative of the user increasing concentration on a particular area of the display. The detection of such a facial expression may also take into account changes in the contour of the user's mouth, changes in the contour of the eyebrows, opening or closing of the eyelids, or the like.

For each of the above-mentioned characteristic features to be used in the evaluation of the front camera images, the accuracy in determining the focus area, i.e., in determining whether the user focuses and, if so, where the user 100 focuses, may be increased by applying a learning algorithm so as to individualize the evaluation for specific users.

Moreover, as indicated by the conditional data CD supplied to the processor 24, initiating the process of loading the data may depend on further conditions. For example, the processor 24 may take into account that at a certain time of the day, at a certain day of the week, or in a certain geographical location, the user 100 will typically not select a certain control element. This may also reflect learned user preferences, e.g., obtained by means of a learning algorithm that monitors the user's selections. For example, if the user 100 is has private interest in information available under a certain web link, the user 100 may prefer to select this web link while being at home and/or during the weekend. This may be learned by the learning algorithm or otherwise be configured into the processor 24, so as to be taken into account when initiating loading of the data associated with this link. In some scenarios, the user preference could be taken into account by adjusting the sensitivity in detecting whether the user 100 focuses on the corresponding control element, e.g., by adjusting the criteria to be met before making this determination. In some scenarios, the user preference could also be taken into account by adjusting the above-mentioned time interval after which the user needs to confirm the selection. For example, if the user preferences indicate that a certain control element is preferred, the time interval in which confirmation of the selection is required could be increased, thereby increasing the amount of preloaded data. Due to the user preference, there is a high probability that this preloading will later be confirmed by an actual selection.

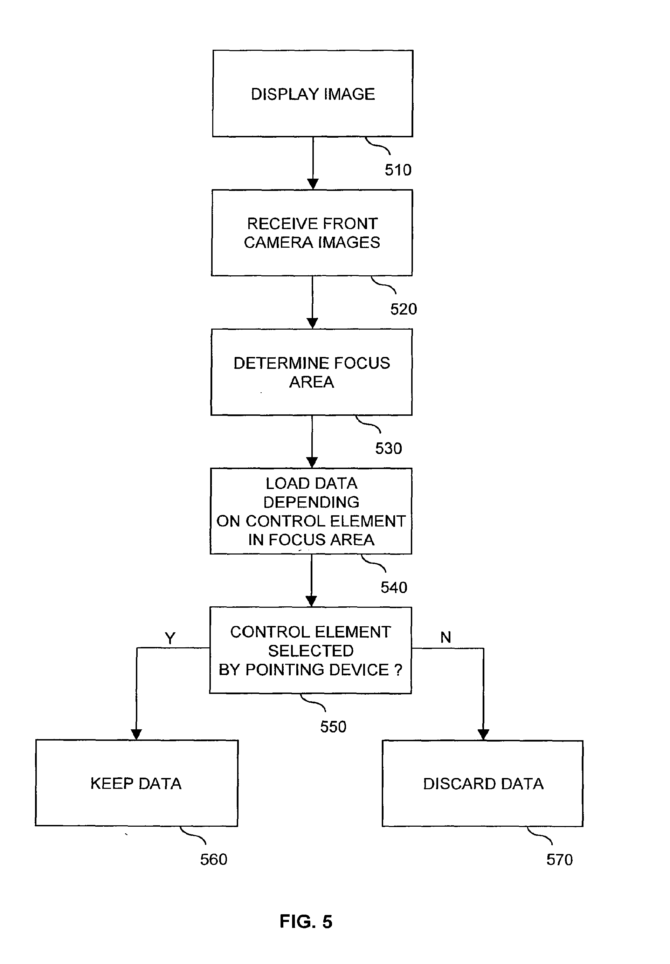

Fig. 5 shows a flowchart for schematically illustrating a method according to an embodiment of the invention. The method may be performed by the electronic device 10 as illustrated in Figs. 1 to 3. In particular, the method may be performed by the processor 24 of the electronic device 10. For example, this could be achieved by having the processor 24 execute suitably configured program code.

At step 510, an image is displayed on a display of the electronic device, e.g., on the display 12 of the electronic device 10. The image may be a webpage or a menu of a graphical user interface. The image includes a control element. For example, if the image is a web page, the control element may be a web link. If the image is a menu of a graphical user interface, the control element may be a menu item. The control element may include graphics and/or text.

At step 520, front camera images are received from a front camera of the electronic device, e.g., from the front camera 14 of the electronic device 10. The front camera images will typically show at least the face of a user of the electronic device. For example, the front camera images may be generated in an operating scenario as illustrated in Fig. 3 and include image data as schematically illustrated in the exemplary front camera image of Fig. 4.

At step 530, the front camera images are analyzed so as to determine the user's focus area. As explained above, this may involve evaluating According to an embodiment of the method, the process of analyzing of the front camera images may include evaluating movements of the user's eyes, evaluating a blinking pattern of the user's eyes, evaluating a pupil size of the user's eyes, and/or detecting a facial expression of the user. If it is determined that the user focuses on the control element shown on the display, e.g., if the control element is within the determined focus area, the method proceeds to step 540, where loading of data associated with the control element is started. The loading of the data is accomplished via an interface of the electronic device, e.g., via the interface 22 of the electronic device 10. In the electronic device, the loaded data are stored in a memory, e.g., in the memory 26 of the electronic device 10.

At step 550, output signals of a pointing device of the electronic device are received, e.g., output signals of the pointing device 16 of the electronic device 10. The pointing device is operable to navigate on the image as displayed on the display. For example, the pointing device may control a pointer element shown on the display, e.g., the pointer element 60 as explained in connection with Fig. 1. From the received output signals it is determined whether the control element is selected by the pointing device, e.g., by a click operation or the like. The determination of step 550 may also require that the control element is selected within a set time interval from starting the loading process.

If the determination of step 550 yields that the control element is selected, as indicated by branch "Y" in Fig. 5, the method continues with step 560 where the loaded data are kept and, if the data have not yet been completely loaded, the started loading process is continued. If the determination of step 550 yields that the control element is not selected, as indicated by branch "N" in Fig. 5, the method continues with step 570, where the loaded data are discarded and, if the data have not yet been completely loaded, the loading process is stopped.

It is to be understood that the method of Fig. 5 may be modified in various ways. For example, in some embodiments, steps 550, 560 or 570 may be omitted and the data may be loaded to the electronic device without requiring further confirmation by the user.

Further, it is to be understood that the embodiments and examples as described above have been provided for the purpose of illustrating the general concepts of the present invention and are susceptible to various modifications. For example, the concepts may be applied in various types of electronic devices, including stationary computers. Also, the described evaluations of front camera images may be combined in any suitable manner and may also be combined with other evaluations. Moreover, it is to be understood that the above-described concepts could be implemented by dedicated hardware or by software to be executed by a processor of a suitably equipped electronic device.

## Claims

1. A method of loading data to an electronic device (10) comprising:
displaying an image on a display (12) of the user device (10), said image including a control element (50);
receiving front camera images (80) from a front camera (14) of the electronic device (10), said front camera (14) being arranged to face toward a user (100) of the electronic device (10);
analyzing the received front camera images (80) to detect whether the user (100) focuses on the control element (50); and
in response to detecting that the user (100) focuses on the control element (50),
starting to load data associated with the control element (50) into a memory (26) of the electronic device (10).

2. The method according to claim 1, comprising:
receiving an output signal of a pointing device (16) for navigating on the displayed image; and
depending on the output signal of the pointing device (16), stopping said loading of the data and/or discarding the loaded data.

3. The method according to claim 2, comprising:
determining from the output signal of the pointing device (16) whether the user (100) has selected the control element (50); and
in response to the user (100) not selecting the control element (50) within a set time interval after said starting to load the data, stopping said loading of the data and/or
discarding the loaded data.

4. The method according to any one of the preceding claims,
wherein said analyzing of the front camera images (80) comprises evaluating movements of the user's eyes.

5. The method according to any one of the preceding claims,
wherein said analyzing of the front camera images (80) comprises evaluating a blinking pattern of the user's eyes.

6. The method according to any one of the preceding claims,
wherein said analyzing of the front camera images (80) comprises evaluating a pupil size of the user's eyes.

7. The method according to any one of the preceding claims,
wherein said analyzing of the front camera images (80) comprises detecting a facial expression of the user.

8. The method according to any one of the preceding claims, comprising:
receiving conditional data (CD),
wherein said starting to load the data is further accomplished depending on the received conditional data (CD).

9. The method according to claim 8,
wherein said conditional data (CD) comprise information on a location of the electronic device (10).

10. The method according to claim 8 or 9,
wherein said conditional data (CD) comprise learned information on the user's preferences.

11. The method according to any one of the preceding claims,
wherein the displayed image is a web page and the control element (50) is a web link.

12. An electronic device (10), comprising:
a display (12) operable to display an image including a control element (50);
a front camera (14) arranged to face a user (100) of the electronic device (10);
a memory (26);
an interface (22) operable to load data into the memory (26); and
a processor (24) configured to receive front camera images (80) from the front camera (14), to analyze the front camera images (80) to detect whether the user (100) of the electronic device (10) focuses on the control element (50), and to start loading data associated with the control element (50) into the memory (26) in response to detecting that the user (100) focuses on the control element (50).

13. The electronic device (10) according to claim 12, further comprising:
a pointing device (16) operable to navigate on the displayed image;
wherein the processor (16) is further configured to receive an output signal of the pointing device (16) and to stop said loading of the data and/or to discard the loaded data depending on the received output signal of the pointing device (16).

14. The electronic device (10) according to claim 12 or 13,
wherein the interface (22) is a radio interface.

15. The electronic device (10) according to any one of claims 12 to 14, wherein the electronic device (10) is configured to operate according to a method as defined in any one of claims 1 to 11.
